# EUROPÄISCHE PATENTSCHRIFT

(11) **EP 2 279 886 B1**
(45) Veröffentlichungstag und Bekanntmachung des Hinweises auf die Patenterteilung: **26.02.2014**
(21) Anmeldenummer: 10007228.9
(22) Anmeldetag: 13.07.2010
(51) Int. Cl.: B60J 7/12

(54) **Faltverdeck für einen Personenkraftwagen mit einem Aufbau**
Collapsible roof for a passenger vehicle with a superstructure
Toit escamotable pour un véhicule automobile de transport de personnes doté d'un montage

(30) Priorität: 29.07.2009 DE 102009035190
(43) Veröffentlichungstag der Anmeldung: 02.02.2011
(73) Patentinhaber: AUDI AG, 85045 Ingolstadt (DE)
(72) Erfinder: Neuberger, Michael, 74613 Öhringen (DE); Papendorf, Marcus, 74357 Bönnigheim (DE)
(74) Vertreter: Engelhardt, Harald

(56) Entgegenhaltungen:
- EP-A1- 1 897 718
- DE-A1- 10 008 492
- DE-A1- 10 313 496
- DE-A1-102006 059 579
- US-A1- 2009 079 227

## Beschreibung

Die Erfindung bezieht sich auf ein Faltverdeck für einen Personenkraftwagen mit einem Aufbau, nach dem Oberbegriff des Patentanspruchs 1.

Es ist ein Dach für einen Personenkraftwagen bekannt, JP 023068822 A, das an je der Längsseite einen vorderen Dachrahmen, einen mittleren Dachrahmen und einen hinteren Dachrahmen aufweist. Dabei sind der vordere Dachrahmen und der hintere Dachrahmen über ein erstes Viergelenk gekoppelt. Ein zweites Viergelenk wirkt zwischen dem zweiten Dachrahmen und dem Aufbau, und der hintere Dachrahmen bildet einen Lenker für das zweite Viergelenk.

Aus der DE 101 44 583 B4 geht ein Verdeck für ein Kraftfahrzeug mit einem Frontelement und einen Bezug hervor. Das Frontelement ist je Fahrzeuglängsseite mit einem vorderen Rahmenstück versehen, das an ein mittleres Rahmenstück angrenzt. Letzteres wiederum ist an ein hinteres Rahmenstück angeschlossen. Die Rahmenstücke werden unter Vermittlung eines vorderen Viergelenks, eines mittleren Viergelenks und eines hinteren Viergelenks bewegt. Darüber hinaus wird der Bezug des Verdecks mittels eines ersten Spriegels und eines zweiten Spriegels, beide quer zur Fahrzeuglängsrichtung verlaufend, abgestützt. Der erste Spriegel ist fest mit dem mittleren Rahmenstück verbunden. Der zweite Spriegel ist schwenkbar am mittleren Rahmenstück angelenkt, und an diesem zweiten Spriegel ist ein Zwischengelenk angebracht, dergestalt, dass die Position des zweiten Spriegels relativ zum mittleren Rahmenstück über zwei Gelenke variabel ist.

Die DE 103 13 496 A1 beschreibt ein Faltverdeck für ein Fahrzeug mit an den Längsseiten des Faltverdecks angeordneten Viergelenkeinrichtungen. Hierbei ist ein erster Lenker einer Viergelenkeirichtung mit einem ersten Gelenk an einem vorderen Rahmenelement und mit einem zweiten Gelenk an einem Dachseitenlenker angelenkt. Ein zweiter Lenker dieser Viergelenkeinrichtung ist über ein drittes Gelenk am vorderen Rahmenelement und über ein viertes Gelenk mit einem Schwenkhebel drehbar verbunden.

Es ist Aufgabe der Erfindung, ein Verdeckgestänge für ein Faltverdeck so konstruktiv auszulegen, dass es bei vertretbar einfacher Bauweise sich durch eine gute Funktion auszeichnet.

Nach der Erfindung wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass dank der Anordnung des Schwenkhebels am Dachseitenlenker gezielt und vorbildlich zwischen einer Schließstellung und einer Offenstellung bewegbar ist. Einen Beitrag dazu leisten auch der erste Lenker und der zweite Lenker der ersten Viergelenkeinrichtung. So ist der erste Lenker unter Zwischenschaltung von ersten sowie zweiten Gelenken am Rahmenelement bzw. am Dachseitenträger angelenkt und der zweite Lenker arbeitet mit den dritten und vierten Gelenken mit besagtem Rahmenelement bzw. einem Schwenkhebel zusammen, der drehbar mit diesem Rahmenelement verbunden ist. Gerade die Anlenkung des zweiten Lenkers am Rahmenelement und dem Schwenkhebel bewirkt eine definierte Absenkung des vierten Gelenkes, wodurch der Drehwinkel der ersten Viergelenkeinrichtung zur Erzielung günstiger kinematischer Verhältnisse reduziert wird. Der Schwenkhebel lässt sich ohne weiteres am Rahmenelement lagern, und zwar dann musterhaft, wenn ein Drehlager des Schwenkhebels koaxial zum zweiten Gelenk ausgerichtet ist. Schließlich ist als vorteilhaft hervorzuheben, dass gegenüberliegen der Schwenkhebel des Verdeckgestänges in einen Verdeckspriegel integriert sind, der in der Schließstellung des Faltverdecks den Verdeckbezug in eine festgelegte Form spannt.

In der Zeichnung wird ein Ausführungsbeispiel der Erfindung gezeigt, das nachstehend erläutert wird.

Es zeigen
Fig. 1 eine Seitenansicht eines Personenkraftwagens mit einem Faltverdeck in einer Schließstellung,
Fig. 2 eine Seitenansicht eines Verdeckgestänges für das Faltverdeck gemäß Fig. 1 in der Schließstellung, jedoch in größerem Maßstab,
Fig. 3 eine Ansicht entsprechend Fig. 2, jedoch das Verdeckgestänge in einer Zwischenstellung,
Fig. 4 eine Ansicht entsprechend Fig. 2, jedoch das Verdeckgestänge in einer Offenstellung und in größerem Maßstab.

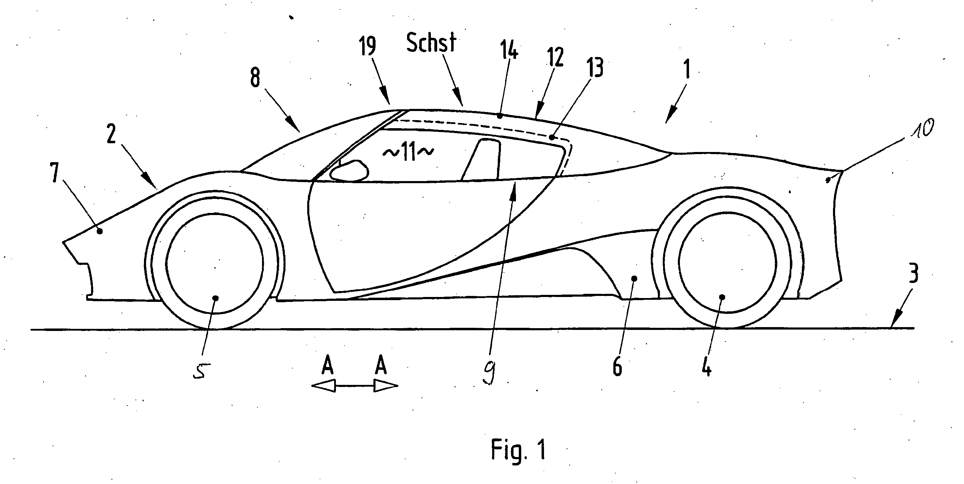

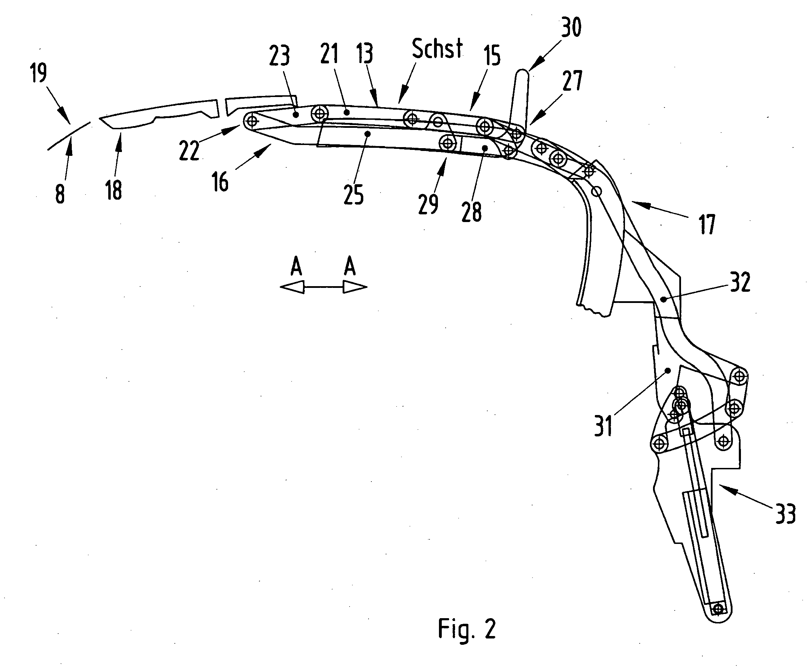

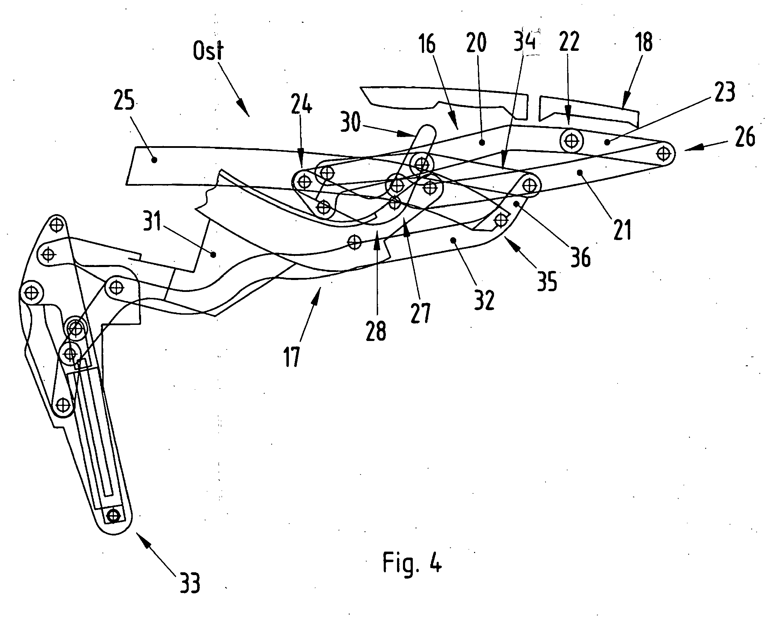

Ein Personenkraftwagen 1 umfasst einen Aufbau 2, der von auf einer Fahrbahn 3 aufstehenden Rädern 4 und 5 getragen wird. Der Aufbau 2 weist einen Grundkörper 6 mit einem Bug 7, einer Windschutzscheibe 8, Seitentüren 9 und einem Heck 10 auf. Oberhalb einer Gürtellinie GI ist der Aufbau 2 mit einem einen Fahrgastraum 11 überspannenden Faltverdeck 12 versehen, das zwischen einer Schließstellung Schst Fig. 1 und 2 sowie einer Offenstellung Ost Fig.4 verstellbar ist und ein Verdeckgestänge 13 mit einem Verdeckbezug 14 besitzt. Das Verdeckgestänge 13 trägt zumindest bereichsweise den Verdeckbezug 14, und es wird an Längsseiten des Faltverdecks 12 von Lenkersystemen 15 begrenzt, die Lenkerelemente enthalten. In jedes Lenkersystem 15 sind eine erste Viergelenkeinrichtung 16 und eine zweite Viergelenkeinrichtung 17 integriert. Die zweite Viergelenkeinrichtung 17 ist mit einem Rahmenelement 18 verbunden, das sich benachbart einem oberen Endbereich 19 der Windschutzscheibe 8 quer zur Fahrzeuglängsrichtung A- A erstreckt.

Die erste Viergelenkeinrichtung 16 ist mit einem ersten Lenker 20 und einem zweiten Lenker 21 versehen. Der erste Lenker 20 ist zum einen mittels eines ersten Gelenks 22 unter Vermittlung eines Tragelements 23 mit dem Rahmenelement 18 verbunden. Zum anderen ist der Lenker 20 über ein zweites Gelenk 24 an einem in der Schließstellung Schst des Faltverdecks 12 etwa horizontal ausgerichteten Dachseitenlenker 25 des Verdeckgestänges 13 gelenkig angebracht. Der zweite Lenker 21 der ersten Viergelenkeinrichtung 16 ist über ein drittes Gelenk 26 mit dem Rahmenelement 18 bzw. dem Tragelement 23 und über ein viertes Gelenk 27 mit einem Schwenkhebel 28 drehbar baulich vereinigt. Dabei ist der Schwenkhebel 28 am Dachseitenlenker 25 unter Zwischenschaltung eines Drehlagers 29 schwenkbar gelagert, wobei das besagte Drehlager 29 koaxial zum zweiten Gelenk 24 ausgerichtet ist.

An gegenüberliegenden Längsseiten des Faltverdecks 12, d.h. in Fahrzeuglängsrichtung A-A gesehen, ist jeweils ein Schwenkhebel 28 angeordnet, und diese beabstandeten Schwenkhebel 28 sind Bestandteil eines sich quer zu dieser Fahrzeuglängsrichtung A-A erstreckenden Verdeckspriegels 30, der den Verdeckbezug 14 in der Schließstellung Schst des Faltverdecks 12 in eine konstruktiv festgelegte Form spannt.

Die zweite Viergelenkeinrichtung 17 ist unter Vermittlung eines ersten Lenkers 31 und eines zweiten Lenkers 32 einerseits am Dachseitenlenker 25 und andererseits an einem z.B. am Aufbau 2 befestigten Hauptlager 33 beweglich gelagert. Der zweite Lenker 32 der zweiten Viergelenkeinrichtung 17 steht über einen Koppellenker 34 mit dem ersten Lenker 20 der ersten Viergelenkeinrichtung 16 in Wirkverbindung, will heißen dieser erste Lenker 20 treibt die erste Viergelenkeinrichtung 16 beim Verbringen des Faltverdecks 12 von der Schließstellung Schst in die Offenstellung Ost an und vice versa.

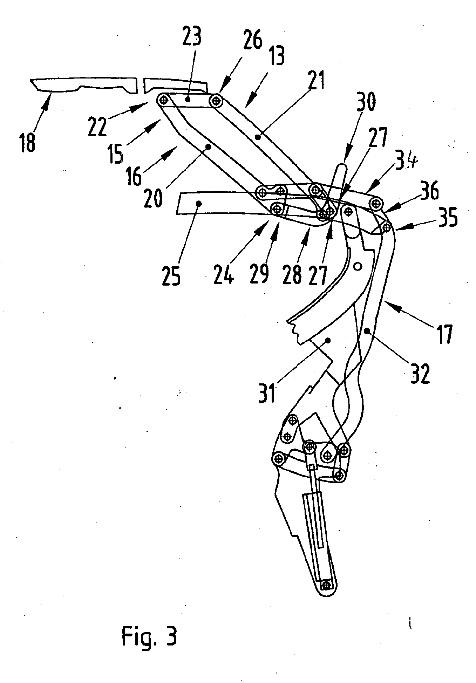

Schließlich sind der Dachseitenlenker 25 und der zweite Lenker 32 der zweiten Viergelenkeinrichtung 17 über eine Schwenkachse 35 miteinander verbunden. Und besagter zweiter Lenker 32 ist mit einer über die Schwenkachse 35 hinausragenden Verlängerung 36 versehen, die mit dem Koppellenker 33 gelenkig zusammenwirkt Fig. 3.

## Patentansprüche

1. Faltverdeck für einen Personenkraftwagen mit einem Aufbau, an dem das ein Verdeckgestänge und einen Verdeckbezug besitzende Faltverdeck zwischen einer Schließstellung und einer Offenstellung bewegbar ist, wobei das Faltverdeck an Längsseiten mit Lenkerelementen versehene Lenkersysteme aufweist, wovon jedes Lenkersystem eine erste mit einem quer zur Fahrzeuglängsrichtung verlaufenden Rahmenelement verbundene Viergelenkeinrichtung und eine zweite Viergelenkeinrichtung umfasst, die mit der ersten Viergelenkeinrichtung gekoppelt ist, wobei ein erster Lenker (20) der ersten Viergelenkeinrichtung (16) mit einem ersten Gelenk (22) am Rahmenelement (18) sowie einem zweiten Gelenk (24) an einem Dachseitenlenker (25) angelenkt ist und ein zweiter Lenker (21) der besagten ersten Viergelenkeinrichtung (16) über ein drittes Gelenk (26) am Rahmenelement (18) und über ein viertes Gelenk (27) mit einem Schwenkhebel (28) drehbar verbunden ist, **dadurch gekennzeichnet, dass** der Schwenkhebel (28) am Dachseitenlenker (25) drehbar gelagert ist.

2. Faltverdeck nach den Ansprüchen 1, **dadurch gekennzeichnet, dass** ein Drehlager (29) des Schwenkhebels (28) koaxial zum zweiten Gelenk (24) ausgerichtet ist.

3. Faltverdeck nach den Ansprüchen 1 bis 2, **dadurch gekennzeichnet, dass** die Schwenkhebel (28) an dem gegenüberliegenden Dachseitenlenker (25) Bestandteil eines den Verdeckbezug (14) spannenden Verdeckspriegels (30) sind.

4. Faltverdeck nach einem oder mehreren der vorangehenden Ansprüche, **dadurch gekennzeichnet, dass** die zweite Viergelenkeinrichtung (17) mittels eines ersten Lenkers (31) und eines zweiten Lenkers (32) einerseits am Dachseitenlenker (25) und andererseits an einem am Aufbau (2) befestigten Hauptlager (33) drehbar gelagert ist.

5. Faltverdeck nach einem oder mehreren der vorangehenden Ansprüche, **dadurch gekennzeichnet, dass** der erste Lenker (20) der ersten Viergelenkeinrichtung (16) mittels eines Koppellenkers (34) von dem zweiten Lenker (32) der zweiten Viergelenkeinrichtung (17) angetrieben wird.

6. Faltverdeck nach einem oder mehreren der vorangehenden Ansprüche, **dadurch gekennzeichnet, dass** der Dachseitenlenker (25) und der zweite Lenker (32) der zweiten Viergelenkeinrichtung (17) über eine Schwenkachse (35) miteinander verbunden sind.

7. Faltverdeck nach den Ansprüchen 6 und 7, **dadurch gekennzeichnet, dass** der zweite Lenker (32) mit einer über die Schwenkachse (35) hinausragenden Verlängerung versehen ist, die mit dem Koppellenker (34) gelenkig zusammenwirkt.

## Claims

1. Folding top for a passenger vehicle comprising a body on which the folding top having a folding top frame assembly and a folding top covering is movable between a closed position and an open position, the folding top comprising link systems provided with link elements on the longitudinal sides thereof, each link system comprising a first four-bar linkage connected to a frame element extending transverse to the longitudinal direction of the vehicle and a second four-bar linkage which is coupled to the first four-bar linkage, a first link (20) of the first four-bar linkage (16) being articulated to a first joint (22) on the frame element (18) and to a second joint (24) on a roof side link (25), and a second link (21) of said first four-bar linkage (16) is rotatably connected to the frame element (18) via a third joint (26) and to a pivot lever (28) via a fourth joint (27), **characterised in that** the pivot lever (28) is rotatably mounted on the roof side link (25).

2. Folding top according to claim 1, **characterised in that** a pivot bearing (29) of the pivot lever (28) is coaxial with the second joint (24).

3. Folding top according to claims 1 to 2, **characterised in that** the pivot levers (28) on the opposite roof side link (25) are components of a folding top bow (30) tensioning the folding top covering (14).

4. Folding top according to one or more of the preceding claims, **characterised in that** the second four-bar linkage (17) is rotatably mounted on the roof side link (25) on one side and on a main bearing (33) attached to the body (2) on the other side by means of a first link (31) and a second link (32).

5. Folding top according to one or more of the preceding claims, **characterised in that** the first link (20) of the first four-bar linkage (16) is driven by the second link (32) of the second four-bar linkage (17) by means of a coupling link (34).

6. Folding top according to one or more of the preceding claims, **characterised in that** the roof side link (25) and the second link (32) of the second four-bar linkage (17) are interconnected via a pivot axis (35).

7. Folding top according to claim 6, **characterised in that** the second link (32) is provided with an extension projecting beyond the pivot axis (35), which extension cooperates with the coupling link (34) in an articulated manner.

## Revendications

1. Toit escamotable pour voiture particulière avec une structure, sur laquelle le toit escamotable possédant une tringlerie et une capote peut être déplacé entre une position de fermeture et une position d'ouverture, dans lequel le toit escamotable présente sur les côtés longs des systèmes de suspension pourvus de bielles, dont chaque système de suspension comprend un premier dispositif à quatre articulations relié à un élément de châssis s'étendant transversalement à la direction longitudinale du véhicule et un second dispositif à quatre articulations, qui est couplé au premier dispositif à quatre articulations, dans lequel une première bielle (20) du premier dispositif à quatre articulations (16) est articulée avec une première articulation (22) sur l'élément de châssis (18) ainsi qu'avec une deuxième articulation (24) sur une bielle côté toit (25) et une seconde bielle (21) dudit premier dispositif à quatre articulations (16) est reliée à rotation via une troisième articulation (26) sur l'élément de châssis (18) et via une quatrième articulation avec un levier pivotant (28), **caractérisé en ce que** le levier pivotant (28) est monté à rotation sur la bielle côté toit (25).

2. Toit escamotable selon la revendication 1, **caractérisé en ce qu'**un palier de pivotement (29) du levier pivotant (28) est aligné coaxialement avec la seconde articulation (24).

3. Toit escamotable selon les revendications 1 et 2, **caractérisé en ce que** les leviers pivotants (28) sur la bielle côté toit opposée (25) sont des constituants d'un arceau de capote (30) couvrant la capote (14).

4. Toit escamotable selon une ou plusieurs des revendications précédentes, **caractérisé en ce que** le second dispositif à quatre articulations (17) est monté à rotation au moyen d'une première bielle (31) et d'une seconde bielle (32), d'une part, sur la bielle côté toit (25) et, d'autre part, sur un palier principal (33) fixé sur la structure (2) .

5. Toit escamotable selon une ou plusieurs des revendications précédentes, **caractérisé en ce que** la première bielle (20) du premier dispositif à quatre articulations (16) est entraînée au moyen d'une bielle de couplage (34) par la seconde bielle (32) du second dispositif à quatre articulations (17).

6. Toit escamotable selon une ou plusieurs des revendications précédentes, **caractérisé en ce que** la bielle côté toit (25) et la seconde bielle (32) du second dispositif à quatre articulations (17) sont reliées l'une à l'autre via un axe pivot (35).

7. Toit escamotable selon la revendication 6, **caractérisé en ce que** la seconde bielle (32) est pourvue d'un prolongement saillant de l'axe pivot (35), qui coopère avec la bielle de couplage (34) par articulation.
